# EUROPÄISCHE PATENTSCHRIFT

(11) **EP 1 080 976 B1**
(45) Veröffentlichungstag und Bekanntmachung des Hinweises auf die Patenterteilung: **05.03.2014**
(21) Anmeldenummer: 00117266.7
(22) Anmeldetag: 16.08.2000
(51) Int. Cl.: B60K 35/00, B60K 37/02

(54) **Verfahren und Vorrichtung zur Darstellung von Warnmeldungen und Interaktionsaufforderungen**
Method and device to display alarm messages and action requests
Procédure et dispositif pour afficher des alarmes et des demandes d'action

(30) Priorität: 03.09.1999 DE 19941957
(43) Veröffentlichungstag der Anmeldung: 07.03.2001
(73) Patentinhaber: Volkswagen Aktiengesellschaft, 38440 Wolfsburg (DE)
(72) Erfinder: Liebig, Eckhard, 38518 Gifhorn (DE); Crull, Torsten, 38106 Braunschweig (DE); Kiesewetter, Thomas, 38118 Braunschweig (DE); Heimermann, Matthias, 38302 Wolfenbüttel (DE); Lilienthal, Jörg, 38518 Gifhorn (DE)

(56) Entgegenhaltungen:
- EP-A- 0 771 686
- EP-A- 0 812 273
- EP-A- 0 853 015
- US-A- 5 121 112
- US-A- 5 757 268

## Beschreibung

Die Erfindung betrifft ein Verfahren und eine Vorrichtung zur Darstellung von Warnmeldungen und Interaktionsaufforderungen.

Aufgrund des begrenzten Bauraumes in Kraftfahrzeugen und der gleichzeitigen Zunahme von Komfortgeräten wie beispielsweise Navigationsgeräten, Autotelefonen und Audio-Systemen sind Multifunktionsbedieneinrichtungen entwickelt worden, auf denen nutzerindividuell einzelne Menüs der verschiedenen Komfortgeräte aufrufbar sind. Über diese Menüs sind dann Systemzustände abrufbar bzw. können Einstellungen für das jeweilige Komfortgerät vorgenommen werden. Eine solche Multifunktions-Bedieneinrichtung für Kraftfahrzeuge ist beispielsweise aus der EP 366 132 A2 bekannt. Andere Systemzustände wie z.B. der Öldruck oder der Füllstand des Kraftstoffes werden auf separaten Anzeigen oder mittels Kontrolleuchten dargestellt. Dadurch ist es leicht möglich, daß der Kraftfahrzeugführer handlungskritische Systemzustände oder andere notwendige Interaktionen übersieht, was zu Komforteinbußen oder zum Ausfall des Kraftfahrzeuges führen kann.

Aus der DE 41 40 864 A1 ist eine Vorrichtung zur multifunktionellen Anzeige von Diagnosesignalen für das Armaturenbrett eines Kraftfahrzeuges bekannt, mit einer Anzeigeeinrichtung, die durch ein elektronisches Modul steuerbar ist, das eine Anzahl von Informationen entsprechend einer Reihe von Störungssignalen aufnimmt, wobei die Anzeigeeinrichtung derart steuerbar ist, daß jeweils nur eines der Störungssignale erscheint, und daß eine Einrichtung vorgesehen ist, die über das Modul bewirkt, daß nacheinander wenigstens zwei der Störsignale angezeigt werden. Dabei ist weiter vorgesehen, daß das elektronische Modul einen Speicher für eine Anzahl von Störungssignalen umfaßt, wobei jedem Störungssignal ein Prioritätsrang zugeordnet ist. Das Modul ist darauf eingestellt, auf der Anzeigeeinrichtung das Störungssignal mit dem höchsten Prioritätsrang anzuzeigen, wobei die Einrichtung zum Abrufen wenigstens einer weiteren Anzeige manuell betätigbar ist. Nachteilig an der bekannten Vorrichtung ist, daß der Nutzer keinen umfassenden Überblick über die eingegangenen Störungssignale erhält, sondern immer entsprechend der Reihenfolge im Speicher diese manuell aufrufen muß.

Aus der gattungsbildenden US - 5,757,268 ist ein Anzeigesystem mit einem ersten Hauptdisplay und einem zweiten Nebendisplay bekannt, das räumlich getrennt vom ersten Display angeordnet ist. Auf dem Hauptdisplay sind individuell auswählbare Menüs von Komfortkomponenten darstellbar, wobei erfasste handlungskritische interne Systemzustände automatisch im Hauptbereich dargestellt werden.

Aus der EP 0 853 015 A1 ist eine Vorrichtung und ein Verfahren zur Darstellung von Systemzuständen eines Kraftfahrzeuges bekannt, bei der eine Zustandsänderung durch eine farbliche Änderung einer Darstellung signalisiert wird.

Der Erfindung liegt daher das technische Problem zugrunde, ein Verfahren und eine Vorrichtung zur Darstellung von Warnmeldungen und Interaktionsaufforderungen zu schaffen, mittels derer ein Kraftfahrzeugführer übersichtlich und zuverlässig auf Gefahrenstellen, kritische Systemzustände oder vorzunehmende Handlungen hingewiesen wird.

Die Lösung des technischen Problems ergibt sich durch die Gegenstände mit den Merkmalen der Patentansprüche 1 und 6. Weitere Ausgestaltungen der Erfindung ergeben sich aus den Unteransprüchen.

Hierzu wird die Multifunktionsanzeigeeinheit in einen Hauptbereich und in einen Nebenbereich unterteilt, wobei erfaßte handlungskritische interne Systemzustände, externe Umgebungsbedingungen oder geforderte Interaktionen automatisch mindestens partiell zunächst im Hauptbereich dargestellt werden, wobei die Warnmeldungen und Interaktionsaufforderungen entweder temporär oder solange angezeigt werden, bis die Interaktion durchgeführt wird oder der handlungskritische Systemzustand behoben ist oder die Warnmeldung quittiert wird, wobei die quittierten Warnmeldungen oder Interaktionsaufforderungen anschließend im Nebenbereich dargestellt werden. Dadurch erhält der Nutzer stets einen umfassenden Überblick über alle eingehenden Warnmeldungen oder Interaktionsaufforderungen, wobei noch zu beachtende Warnmeldungen oder Interaktionsaufforderungen im Nebenbereich sichtbar bleiben. Als interne Systemzustände kommen insbesondere die Motoröltemperatur, -menge und der Motoröldruck, sowie der Kraftstoffinhalt, Bremsdruck und ähnliches im Betracht. Die externen Umgebungsbedingungen sind insbesondere Verkehrsmeldungen, wie Staus, Radarkontrollen, Straßenschäden, Geisterfahrer und ähnliches. Die geforderten Interaktione sind insbesondere Fahrtrichtungswechsel zur Einhaltung von Routen eines Navigationssystems, Reaktionen auf ankommenden Telefonanrufe oder das Einschalten von Beleuchtungsmitteln.

In einer bevorzugten Ausführungsform werden die Warnmeldungen und Interaktionsaufforderugnen entsprechend ihrer Dringlichkeit verschieden groß und/oder in verschiedenen Fraben dargestellt. Dadurch erhält der Nutzer optisch sehr schnell und einfach einen Eindruck hinsichtlich der Dringlichkeit der Meldung.

In einer weiteren bevorzugten Ausführungsform werden die Warnmeldungen und Interaktionsaufforderungen nach ihrer Dringlichkeit klassifiziert, wobei die Warnmeldung und Interaktionsaufforderung bei geringer Dringlichkeit derart im Hauptbereich dargestellt werden, daß das individuell ausgewählte Menü im Hauptbereich voll bedienbar bleibt.

In einer weiteren bevorzugten Ausführungsform werden im Nebenbereich komprimierte Anzeigen verschiedener Hauptgeräte und/oder Kontrollanzeigen permanent angezeigt.

Vorzugsweise werden die zuvor im Hauptbereich dargestellten benutzerindividuellen Menüfunktionen im Nebenbereich solange dargestellt, wie die Warnmeldungen oder Interaktionsaufforderungen im Hauptbereich dargestellt sind.

Die Erfindung wird nachfolgend anhand eines bevorzugten Ausführungsbeispieles näher erläutert.

Die Figuren zeigen:
- Fig. 1: eine Darstellung bei eingehendem Telefonanruf,
- Fig. 2: eine Darstellung für eine Aufforderung zur Fahrtrichtungsänderung,
- Fig. 3: eine Tankaufforderung mit geringer Dringlichkeit,
- Fig. 4: eine Tankaufforderung mit hoher Dringlichkeit,
- Fig. 5: eine erste Warnmeldung bezüglich des Öldrucks.
- Fig. 6: eine zweite Warnmeldung bezüglich des Öldrucks,
- Fig. 7: eine erste Darstellung eines freiprogrammierbaren Kombiinstrumentes,
- Fig. 8: eine zweite Darstellung eines freiprogrammierbaren Kombiinstrumentes,
- Fig. 9: eine dritte Darstellung eines freiprogrammierbaren Kombiinstrumentes und
- Fig.10: eine vierte Darstellung eines freiprogrammierbaren Kombiinstrumentes.

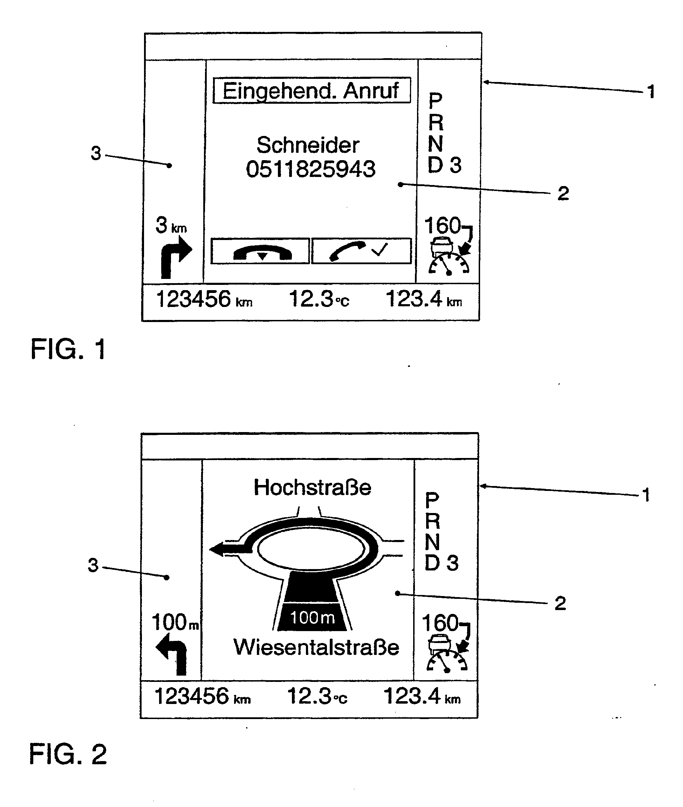

In der Fig. 1 ist eine Multifunktionsanzeigeeinheit 1 mit einem Hauptbereich 2 und einem Nebenbereich 3 dargestellt. In dem Hauptbereich 2 ist eine Interaktionsaufforderung dargestellt, ob ein eingehender Anruf angenommen werden soll oder nicht. Im Nebenbereich 3 sind eine Fahrtrichtungsanzeige eines Navigationssystems und andere komprimierte Anzeigen von Komfortgeräten dargestellt, wie beispielsweise Gesamtfahrstrecke, Temperatur, zurückgelegte Fahrstrecke einer Route, Systemzustand eines ADR/GRA-Systems und der aktive Gang eines Automatikgetriebes. Diese Anzeigen werden permanent an der gleichen Stelle im Nebenbereich 3 angezeigt und dienen zur allgemeinen Informierung des Kraftfahrzeugführers. Da ein eingehender Telefonanruf eine entsprechende schnelle Interaktion erfordert, wird bei einem eingehenden Anruf unmittelbar eine entsprechende Interaktionsaufforderung im Hauptbereich 2 dargestellt. Nimmt dann der Kraftfahrzeugführer den Anruf entgegen oder schaltet diesen stumm, so wird die Darstellung der Interaktionsaufforderung gelöscht und wieder ein ursprüngliches vom Kraftfahrzeugführer ausgewähltes Menü im Hauptbereich 2 dargestellt.

In der Fig. 2 ist eine Interaktionsaufforderung zum Fahrtrichtungswechsel aufgrund einer berechneten Route eines Navigationssystems dargestellt. Da der Fahrtrichtungswechsel in 100 m vorzunehmen ist, wie sich auch aus der Anzeige im Nebenbereich 3 ergibt, wird diese Interaktionsaufforderung als dringlich klassifiziert und die detaillierte Darstellung zum Fahrtrichtungswechsel automatisch im Hauptbereich 2 angezeigt, bis der Fahrtrichtungswechsel durch den Kraftfahrzeugführer vollzogen wurde. Anschließend wird die Darstellung mit der Interaktionsaufforderung gelöscht und wieder ein ursprüngliches vom Kraftfahrzeugführer ausgewähltes Menü im Hauptbereich 2 dargestellt, wobei die Anzeige im Nebenbereich 3 jedoch aktualisiert erhalten bleibt.

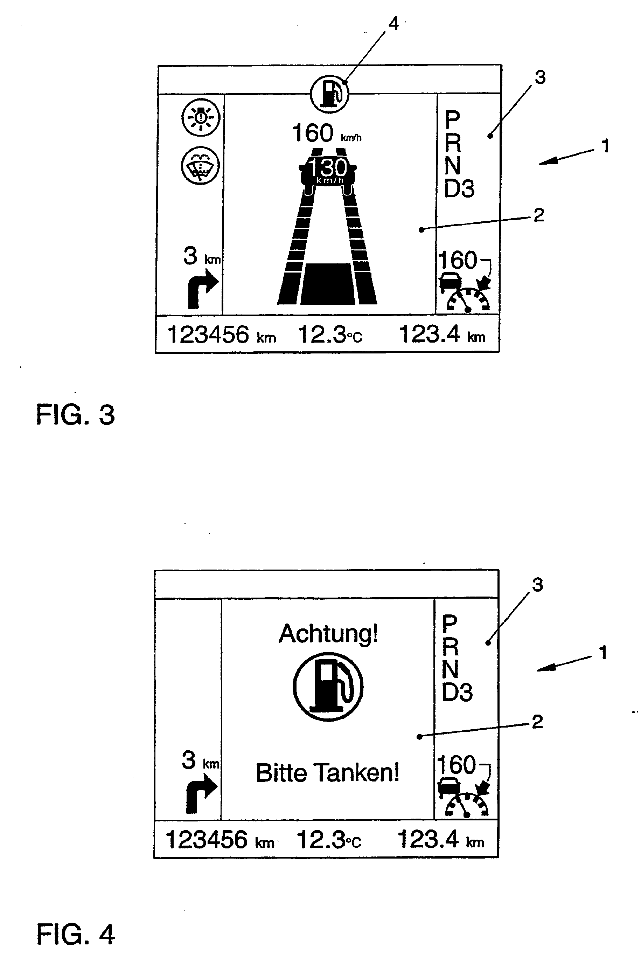

In der Fig. 3 ist im Hauptbereich 2 eine Menüdarstellung eines ADR-/GRA-Systems dargestellt, die vom Kraftfahrzeugführer ausgewählt wurde, die detaillierter als die permanente Anzeige im Nebenbereich 3 ist. Zusätzlich ist im Neben- und Hauptbereich eine als Piktogramm 4 ausgebildete Warnmeldung dargestellt, die dem Kraftfahrzeugführer mitteilt, daß dieser bald tanken muß. Hierzu wertet der Mikroprozessor beispielsweise die Daten eines Füllstandsensors des Kraftstofftanks aus und erzeugt bei Unterschreitung eines ersten Grenzwertes das Piktogramm 4. Aufgrund der Größe und des Ortes der Darstellung des Piktogramms 4 ist das Menü im Hauptbereich 2 nicht beeinträchtigt. Unterschreitet dann der Füllstand einen zweiten Grenzwert, so wird dieser als kritisch und somit die Warnmeldung als dringlich klassifiziert, so daß nunmehr die Warnmeldung im Hauptbereich 2 dargestellt wird, was in Fig. 4 dargestellt ist. Diese Darstellung im Hautbereich 2 bleibt nun solange angezeigt, bis der Kraftfahrzeugführer tankt.

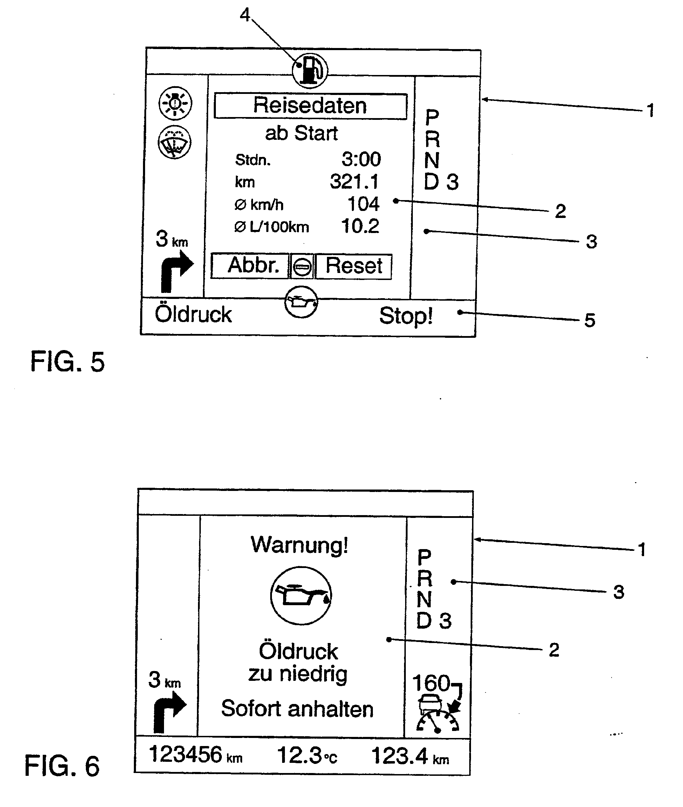

In der Fig. 5 ist im Hauptbereich 2 ein Menü zur Anzeige von Reisedaten dargestellt, das vom Kraftfahrzeugführer individuell ausgewählt wurde. Neben der Warnmeldung mittels des Piktogramms 4, daß der Kraftstoff einen ersten Grenzwert unterschritten hat, ist im Nebenbereich 3 eine zweite Warnmeldung 5 dargestellt, die mittels alphanumerischer Angaben und eines weiteren Piktogramms den Kraftfahrzeugführer darüber informiert, daß der Öldruck nicht in Ordnung ist und das Kraftfahrzeug angehalten werden sollte. Erfaßt dabei die Vorrichtung erstmalig, daß der Öldruck nicht in Ordnung ist, so wird diese Warnmeldung 5 zunächst im Hauptbereich 2 dargestellt, was in Fig. 6 gezeigt ist. Da diese Warnmeldung 5 eine sehr hohe Dringlichkeit hat, wird diese über den gesamten Hauptbereich 2 dargestellt, so daß das benutzerindividuelle Menü nicht mehr bedient werden kann. Quittiert dann der Nutzer die Warnmeldung 5, so wird diese im Nebenbereich 3 dargestellt und das benutzerindividuelle Menü "Reisedaten" erscheint wieder im Hauptbereich 2, was in Fig. 5 dargestellt ist.

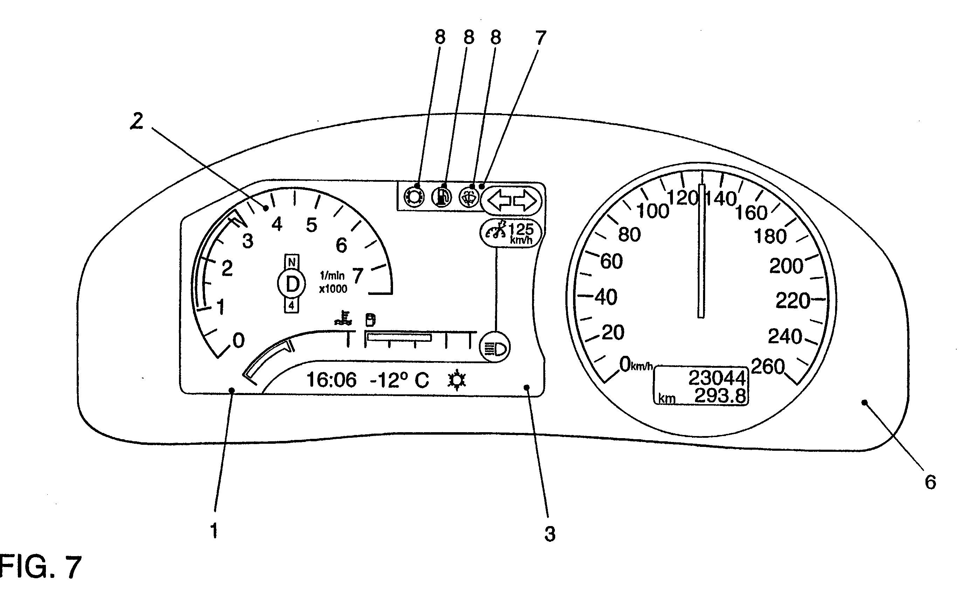

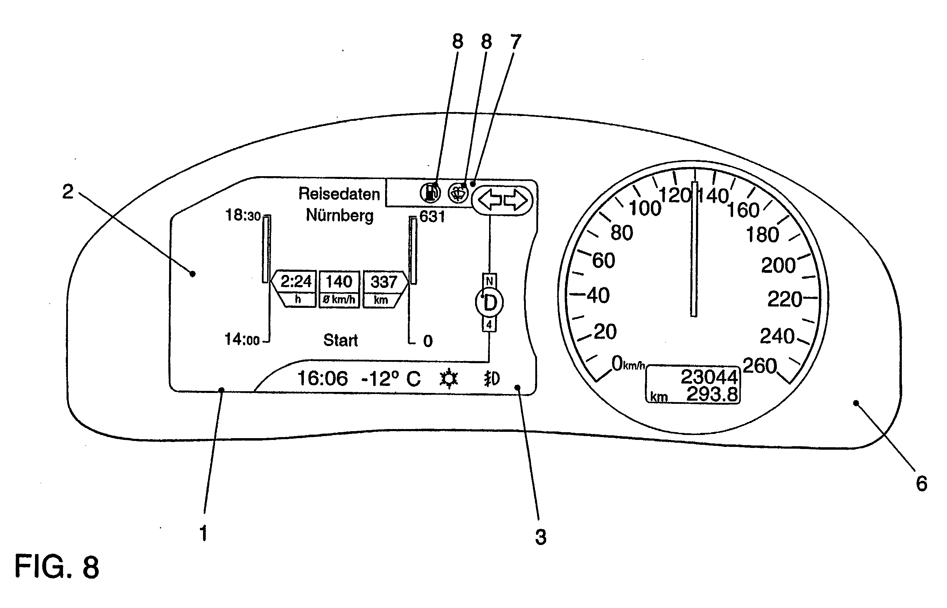

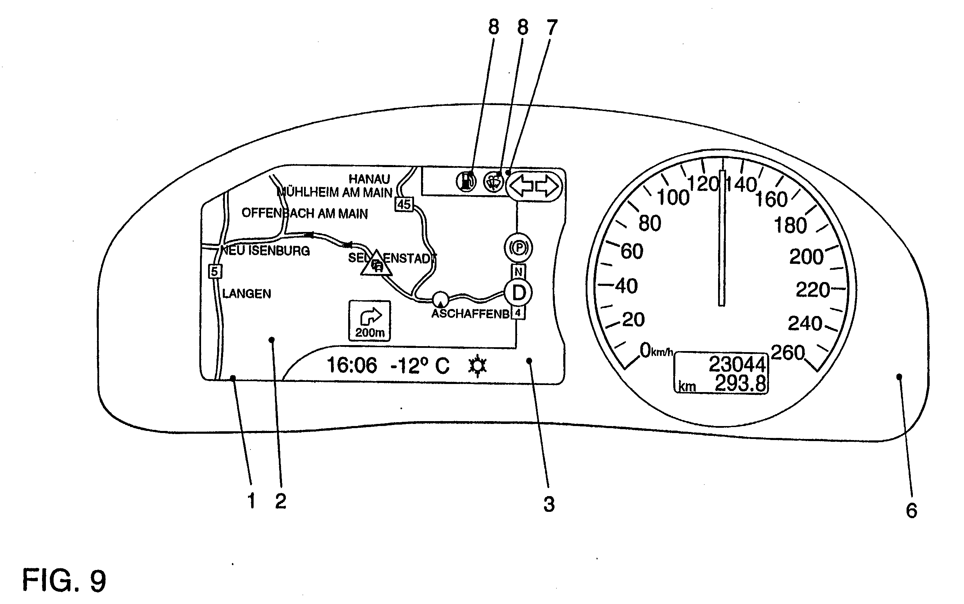

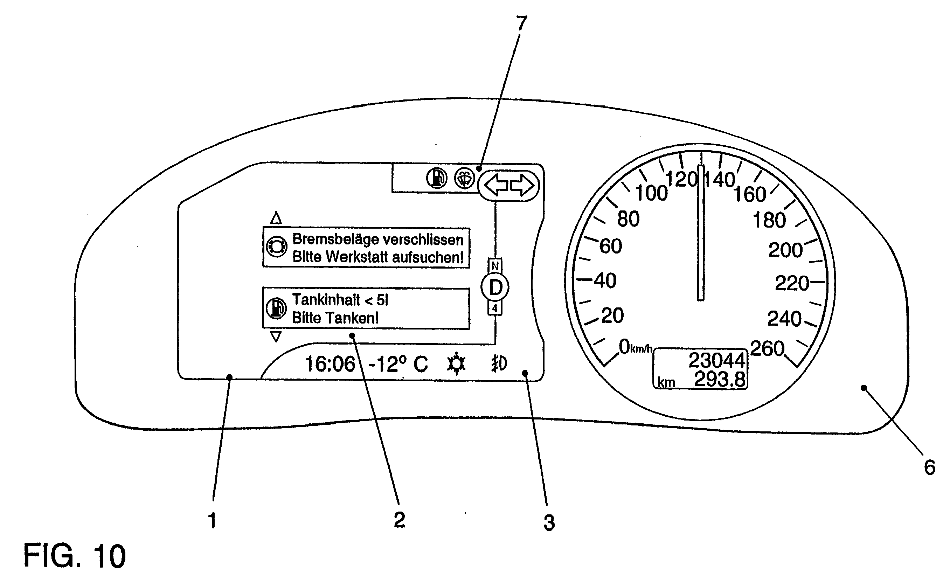

In der Figur 7 ist eine Multifunktionsanzeigeeinheit 1 als Teil eines Kombiinstrumentes 6 dargestellt. Die Multifunktionsanzeigeeinheit 1 umfaßt wieder einen Hauptbereich 2 und einen Nebenbereich 3. Der Hauptbereich 2 kann wahlweise vom Nutzer verändert werden. In einer Standardeinstellung gemäß Fig. 7 wird beispielsweise ein analoger Drehzahlmesser, eine Gebläseeinstellung und eine Tankanzeige dargestellt, wohingegen in der Fig. 8 eine Reisedatenanzeige und in Fig. 9 eine digitale Straßenkarte eines Navigationssystems dargestellt sind. Im Nebenbereich 3 sind permanent bestimmte Anzeigen wie beispielsweise Uhrzeit, Außentemperatur und Fahrtrichtungsanzeigemittel, sowie komprimierte Darstellungen von Komfortgeräten dargestellt. Diese Anzeigen werden permanent an stets gleicher Position im Nebenbereich 3 dargestellt, wobei einzelne Anzeigen nur im aktiven bzw. eingeschalteten Zustand dargestellt werden. Der Nebenbereich 3 umfaßt einen Warnmeldungsbereich 7. Die Länge des Warnmeldungsbereiches 7 ist dabei abhängig von der Art der Darstellung im Hauptbereich 2 und kann sich im Extremfall über die volle Länge der Multifunktionsanzeigeeinheit 1 erstrecken, insbesondere bei den Darstellungen von Reisedaten und digitalen Straßenkarten. Geht nun eine Warnmeldung ein, so wird diese zunächst, wie zuvor beschrieben, im Hauptbereich 2 dargestellt. Nach einer gewissen Zeit oder nachdem diese quittiert wurde, wird dann die Warnmeldung im Warnmeldungsbereich 7 des Nebenbereichs 3 angeordnet. Die Warnmeldungen werden dabei vorzugsweise in der Reihenfolge ihres Auftretens von rechts nach links chronologisch im Warnmeldungsbereich 7 angeordnet. Überschreitet dabei die Anzahl der darzustellenden Warnmeldungen den vorhandenen Platz im Warnmeldungsbereich 7, so können die letzten Warnmeldungen alternierend oder die Warnmeldungen wie bei einem Schieberegister sukzessive mit einer einstellbaren Taktzeit von einigen Sekunden den Warnmeldungsbereich 7 durchlaufen. Alternativ zur chronologischen Reihenfolge der Warnmeldungen im Warnmeldungsbereich 7 können diese auch nach ihrer Bedeutung sortiert dargestellt werden. Wird nun eine Warnmeldung mit zuvor geringer Dringlichkeit durch Zeitverzug dringlich, so wird diese Warnmeldung erneut im Hauptbereich 2 dargestellt (Fig. 10). Dabei können die Warnmeldungen mit hoher Dringlichkeit nochmals unterteilt werden, nämlich in derartige Warnmeldungen, die ein sofortiges Anhalten erforderlich machen, und solche, die noch ein kurzzeitiges Weiterfahren erlauben. Dies kann neben den entsprechenden alphanumerischen Angaben zusätzlich durch unterschiedliche Farben verstärkt werden. Bei Warnmeldungen, die ein sofortiges Anhalten erfordern, kann zusätzlich der alphanumerische Informationsgehalt in einem Teil des Nebenbereichs 3 dargestellt werden.

Wird beispielsweise die Warnmeldung in Fig. 6 quittiert, so wird eine verkürzte alphanumerische Warnmeldung im Nebenbereich 3 wie in Fig. 5 dargestellt.

## Patentansprüche

1. Verfahren zur Darstellung von Warnmeldungen und Interaktionsaufforderungen, mittels einer Multifunktionsanzeigeeinheit, auf der individuell auswählbare Menüs von Komfortkomponenten darstellbar sind, wobei
die Multifunktionseinheit (1) in einem Hauptbereich (2) und in einem Nebenbereich (3) unterteilt ist, wobei bei erfaßten handlungskritischen internen Systemzuständen, externen Umgebungsbedingungen oder geforderten Interaktionen die Warnmeldungen und Interaktionsaufforderungen automatisch mindestens partiell zunächst im Hauptbereich (2) dargestellt werden, wobei die Warnmeldungen und Interaktionsaufforderungen entweder temporär oder solange im Hauptbereich angezeigt werden, bis die Interaktion durchgeführt wird oder der handlungskritische Systemzustand behoben ist oder die Warnmeldung quittiert wird, **dadurch gekennzeichnet, dass** die quittierten Warnmeldungen oder die nur temporär eingeblendeten Warnmeldungen oder Interaktionsaufforderungen anschließend im Nebenbereich (3) dargestellt werden.

2. Verfahren nach Anspruch 1, **dadurch gekennzeichnet, daß** mit zunehmender Dringlichkeit der Warnmeldungen und Interaktionsaufforderungen die Größe und/oder Farbe der Darstellung verändert wird.

3. Verfahren nach Anspruch 1 oder 2, **dadurch gekennzeichnet, daß** die Warnmeldungen und Interaktionsaufforderungen nach ihrer Dringlichkeit klassifiziert werden, wobei die Warnmeldungen und Interaktionsaufforderungen bei geringer Dringlichkeit derart im Hauptbereich (2) dargestellt werden, daß das individuell ausgewählte Menü im Hauptbereich (2) voll bedienbar bleibt.

4. Verfahren nach einem der vorangegangenen Ansprüche, **dadurch gekennzeichnet, daß** im Nebenbereich (3) komprimierte Anzeigen verschiedener Komfortgeräte und/oder Kontrollanzeigen pernament angezeigt werden.

5. Verfahren nach einem der Ansprüche 1 bis 4, **dadurch gekennzeichnet, daß** die zuvor im Hauptbereich (2) dargestellte benutzerindividuelle Menüfunktion im Nebenbereich (3) dargestellt wird, solange Warnmeldungen oder Interaktionsaufforderungen im Hauptbereich (2) dargestellt werden.

6. Vorrichtung zur Darstellung von Warnmeldungen und Interaktionsaufforderungen, umfassend eine Multifunktionsanzeigeeinheit und einen den Bildaufbau der Multifunktionsanzeigeeinheit ansteuernden Mikroprozessor, der mit einer Schnittstelle oder einem Steuergerät zur externen Kommunikation und Sensoren und Steuergeräten zur Erfassung von Systemzuständen verbunden ist, deren Daten im Mikroprozessor bewertbar sind, wobei bei Erfassung von kritischen Systemzuständen oder erforderlichen Interaktionen Warnmeldungen oder Interaktionsaufforderungen generierbar und auf der Multifunktionsanzeigeeinheit (1) darstellbar sind, wobei
die Multifunktionsanzeigeeinheit (1) in einen Hauptbereich (2) und in einen Nebenbereich (3) unterteilt ist, wobei bei erfaßten handlungskritischen internen Systemzuständen, externen Umgebungsbedingungen oder geforderten Interaktionen die Warnmeldungen und Interaktionsaufforderungen automatisch mindestens partiell zunächst im Hauptbereich (3) darstellbar sind, wobei die Warnmeldungen und Interaktionsaufforderungen entweder temporär oder solange im Hauptbereich anzeigbar sind, bis die Interaktion durchgeführt ist oder der handlungskritische Systemzustand behoben ist oder die Warnmeldung quittiert worden ist, **dadurch gekennzeichnet, dass** die quittierten Warnmeldungen oder die nur temporär eingeblendeten Warnmeldungen oder Interaktionsaufforderungen anschließend im Nebenbereich (3) dargestellt sind.

7. Vorrichtung nach Anspruch 6, **dadurch gekennzeichnet, daß** mit zunehmender Drinlichkeit der Warnmeldungen und Interaktionsaufforderungen die Größe und/oder Farbe der Darstellung veränderlich darstellbar ist.

8. Vorrichtung nach Anspruch 6 oder 7, **dadurch gekennzeichnet, daß** die Warnmeldgen und Interaktionsaufforderungen nach ihrer Dringlichkeit klassifizierbar sind, wobei die Warnmeldungen und Interaktionsaufforderungen bei geringer Dringlichkeit derart im Hauptbereich (2) darstellbar sind, daß das individuell ausgewählte Menü im Hauptbereich (2) voll bedienbar ist.

9. Vorrichtung nach einem der Ansprüche 6 bis 8, **dadurch gekennzeichnet, daß** im Nebenbereich (3) komprimierte Anzeigen verschiedener Komfortgeräte und/oder Kontrollanzeigen permanent angezeigt sind.

10. Vorrichtung nach einem der Ansprüche 6 bis 9, **dadurch gekennzeichnet, daß** die zuvor im Hauptbereich (2) dargestellt benutzerindividuelle Menüfunktion im Nebenbereich (3) dargestellt ist, solange Warnmeldungen oder Interaktionsaufforderungen im Hauptbereich (2) dargestellt sind.

11. Vorrichtung anch einem der Ansprüche 6 bis 10, **dadurch gekennzeichnet, daß** die Multifunktionsanzeigeeinheit (1) als Bestandteil eines Kombiinstrumentes (6) ausgebildet ist.

## Claims

1. Method for presenting warning messages and interaction requests by means of a multifunction display unit on which individually selectable menus for convenience components can be presented, wherein
the multifunction unit (1) is divided into a primary area (2) and a secondary area (3), wherein detection of action-critical internal system states, external ambient conditions or required interactions prompts automatic at least partial presentation of the warning messages and interaction requests initially in the primary area (2), with the warning messages and interaction requests being displayed in the primary area either temporarily or until the interaction is performed or the action-critical system state has been rectified or the warning message is acknowledged, **characterized in that** the acknowledged warning messages or the only temporarily shown warning messages or interaction requests are then presented in the secondary area (3).

2. Method according to Claim 1, **characterized in that** the size and/or colour of the presentation is altered as the urgency of the warning messages and interaction requests increases.

3. Method according to Claim 1 or 2, **characterized in that** the warning messages and interaction requests are classified according to their urgency, wherein for low urgency the warning messages and interaction requests are presented in the primary area (2) such that the individually selected menu in the primary area (2) remains fully controllable.

4. Method according to one of the preceding claims, **characterized in that** compressed displays for various convenience appliances and/or control displays are displayed in the secondary area (3) permanently.

5. Method according to one of Claims 1 to 4, **characterized in that** the user-specific menu function presented in the primary area (2) previously is presented in the secondary area (3) while warning messages or interaction requests are presented in the primary area (2).

6. Apparatus for presenting warning messages and interaction requests, comprising a multifunction display unit and a microprocessor that controls the image formation for the multifunction display unit and that is connected to an interface or to a controller for external communication and to sensors and controllers for detecting system states having data that can be assessed in the microprocessor, wherein detection of critical system states or necessary interactions can prompt warning messages or interaction requests to be generated and to be presented on the multifunction display unit (1), wherein
the multifunction display unit (1) is divided into a primary area (2) and a secondary area (3), wherein detection of action-critical internal system states, external ambient conditions or required interactions can prompt automatic at least partial presentation of the warning messages and interaction requests initially in the primary area (2), with the warning messages and interaction requests being able to be displayed in the primary area either temporarily or until the interaction has been performed or the action-critical system state has been rectified or the warning message has been acknowledged, **characterized in that** the acknowledged warning messages or the only temporarily shown warning messages or interaction requests are then being presented in the secondary area (3).

7. Apparatus according to Claim 6, **characterized in that** the size and/or colour of the presentation can be presented variably as the urgency of the warning messages and interaction requests increases.

8. Apparatus according to Claim 6 or 7, **characterized in that** the warning messages and interaction requests can be classified according to their urgency, wherein for low urgency the warning messages and interaction requests can be presented in the primary area (2) such that the individually selected menu in the primary area (2) is fully controllable.

9. Apparatus according to one of Claims 6 to 8, **characterized in that** compressed displays for various convenience appliances and/or control displays are being displayed in the secondary area (3) permanently.

10. Apparatus according to one of Claims 6 to 9, **characterized in that** the user-specific menu function presented in the primary area (2) previously is being presented in the secondary area (3) while warning messages or interaction requests are being presented in the primary area (2).

11. Apparatus according to one of Claims 6 to 10, **characterized in that** the multifunction display unit (1) is in the form of part of a combined instrument (6).

## Revendications

1. Procédure d'affichage d'alarmes et de demandes d'action, à l'aide d'une unité d'affichage multifonction sur laquelle des menus de composants de confort pouvant être sélectionnés individuellement peuvent être affichés ;
l'unité multifonctionnelle (1) étant subdivisée en une zone principale (2) et en une zone secondaire (3), en présence d'états de système internes critiques déterminés nécessitant une action, de conditions environnementales externes ou d'interactions demandées, les alarmes et demandes d'action s'affichant automatiquement au moins en partie d'abord dans la zone principale (2), les alarmes et demandes d'action étant affichées dans la zone principale soit temporairement soit jusqu'à ce que l'interaction se produise ou que l'état de système critique nécessitant une action soit levé ou que l'alarme soit supprimée ;
**caractérisée en ce que** les alarmes supprimées ou les alarmes ou demandes d'action seulement temporairement masquées sont ensuite affichées dans la zone secondaire (3).

2. Procédure selon la revendication 1, **caractérisée en ce que** la taille et/ou la couleur de l'affichage varie en fonction de l'urgence des alarmes et des demandes d'action.

3. Procédure selon la revendication 1 ou 2, **caractérisée en ce que** les alarmes et demandes d'action sont classées en fonction de leur urgence, les alarmes et demandes d'action peu urgentes étant représentées de telle sorte dans la zone principale (2) que le menu individuellement sélectionné dans la zone principale (2) reste entièrement utilisable.

4. Procédure selon l'une quelconque des revendications précédentes, **caractérisée en ce que** les affichages comprimés des différents appareils de confort et/ou l'affichage de contrôle sont affichés en permanence dans la zone secondaire (3).

5. Procédure selon l'une quelconque des revendications 1 à 4, **caractérisée en ce que** la fonction de menu personnalisée auparavant représentée dans la zone principale (2) est affichée dans la zone secondaire (3) tant que des alarmes ou demandes d'action sont affichées dans la zone principale (2).

6. Dispositif d'affichage d'alarmes et de demandes d'action, comprenant une unité d'affichage multifonction et un microprocesseur pilotant la structure d'image de l'unité d'affichage multifonction et relié à une interface ou à un appareil de commande servant à la communication externe ainsi qu'à des capteurs et à des appareils de commande servant à la détection d'états de système et dont les données sont analysées dans le microprocesseur, des alarmes critiques ou demandes d'action pouvant être générées et affichées sur l'unité d'affichage multifonction lors de la détection d'états de système critiques ou d'interactions nécessaires ;
l'unité multifonctionnelle (1) étant subdivisée en une zone principale (2) et en une zone secondaire (3), en présence d'états de système internes critiques déterminés nécessitant une action, de conditions environnementales externes ou d'interactions demandées, les alarmes et demandes d'action s'affichant automatiquement au moins en partie d'abord dans la zone principale (2), les alarmes et demandes d'action étant affichées dans la zone principale soit temporairement soit jusqu'à ce que l'interaction se produise ou que l'état de système critique nécessitant une action soit levé ou que l'alarme soit supprimée ;
**caractérisé en ce que** les alarmes supprimées ou les alarmes ou demandes d'action seulement temporairement masquées sont ensuite affichées dans la zone secondaire (3).

7. Dispositif selon la revendication 6, **caractérisé en ce que** la taille et/ou la couleur de l'affichage varie en fonction de l'urgence des alarmes et des demandes d'action.

8. Dispositif selon la revendication 6 ou 7, **caractérisé en ce que** les alarmes et demandes d'action sont classées en fonction de leur urgence, les alarmes et demandes d'action peu urgentes étant représentées de telle sorte dans la zone principale (2) que le menu individuellement sélectionné dans la zone principale (2) reste entièrement utilisable.

9. Dispositif selon l'une quelconque des revendications 6 à 8, **caractérisé en ce que** les affichages comprimés des différents appareils de confort et/ou l'affichage de contrôle sont affichés en permanence dans la zone secondaire (3).

10. Dispositif selon l'une quelconque des revendications 6 à 9, **caractérisé en ce que** la fonction de menu personnalisée auparavant représentée dans la zone principale (2) est affichée dans la zone secondaire (3) tant que des alarmes ou demandes d'action sont affichées dans la zone principale (2).

11. Dispositif selon l'une quelconque des revendications 6 à 10, **caractérisé en ce que** l'unité d'affichage multifonction (1) prend la forme d'un composant de tableau de bord (6).
